# EUROPEAN PATENT APPLICATION

(11) **EP 2 285 131 A1**
(43) Date of publication of application: **16.02.2011**
(21) Application number: 10004663.0
(22) Date of filing: 03.05.2010
(51) Int. Cl.: H04N 13/00, H04N 7/14

(54) **Dual-view display device and video phone including the same**

(30) Priority: 14.07.2009 KR 20090064146
(71) Applicant: LG-Ericsson Co., Ltd., Seoul (KR); Kwangwoon University Industry-Academic Collaboration Foundation, Seoul (KR)
(72) Inventor: Kim, Hyun Dong, Anyang-si Gyeonggi-do 430-710 (KR); Cho, Sung Bum, Seoul 137-775 (KR); Kim, Eun Soo, Seoul 139-957 (KR); Kim, Seung Cheol, Seoul 131-876 (KR)
(74) Representative: Katérle, Axel

(57) **Abstract**

There are provided a dual-view display device and a video phone including the same. A display panel receives combined data of first and second images different from each other and displays a combined image of the first and second images. The first image is formed by a first pixel group and the second image is formed by a second pixel group. A reflection unit reflects one of the first and second images. An image direction control unit enables a user to view one of the first and second images from a first position on the display panel and to view the other of the first and second images from a second position of the reflection unit.

## Description

### BACKGROUND OF THE INVENTION

### 1. Field of the Invention

The present invention relates to video display technology, and more particularly, to a dual-view display device and a video phone including the same.

### 2. Background of the Related Art

With the development of the digital industry and the video industry, various methods are being attempted to display images capable of providing a better sense of reality. For example, there are a method of displaying images using the binocular disparity of human eyes, a method of projecting images using a lens or concave lens, a method of projecting images into space using a special screen, and a method of using a half-mirror.

The method of displaying images using the binocular disparity of human eyes may be inconvenient in that it is possible for a user to view three-dimensional images only by wearing eye-glasses manufactured for a special purpose since the field of view is narrow and it is difficult for the user to view the three-dimensional images with the naked eye. The method using a lens or a concave mirror has a problem in that images may be distorted and the field of view may be narrow even though the images may be observed without eye-glasses since the images are projected into the space. The special screen method using smoke, water vapor, or the like may enable the user to view three-dimensional images without eye-glasses, but may degrade the quality of image since the images are displayed on smoke or a screen. In the method using a half-mirror, a viewer is able to view a virtual image by reflecting an image (real image) displayed on a display panel using a half-mirror. In this case, there is an advantage in that a wide field of view is capable of being secured without image distortion, but there is a problem in that a sense of reality may be degraded since the viewer may simultaneously view two identical images (real and virtual images) by the display panel and the half-mirror when the viewer views the display panel arranged below the half-mirror. The viewer may view only the virtual image when the display panel is located far away from the half-mirror, but it is difficult to arrange the half-mirror to be far away from the display panel in a small-sized video system such as a video phone.

### SUMMARY OF THE INVENTION

The present invention provides a dual-view display device capable of displaying different images on a half-mirror and a display panel, and a video phone including the same.

According to an exemplary embodiment of the present invention, there is provided a dual-view display device including: a display panel which operates to receive combined data of first and second images different from each other and display a combined image of the first and second images, wherein the first image is formed by a first pixel group and the second image is formed by a second pixel group; a reflection unit which reflects one of the first and second images; and an image direction control unit configured to enable a user to view one of the first and second images from a first position on the display panel and to view the other of the first and second images from a second position of the reflection unit.

### BRIEF DESCRIPTION OF THE DRAWINGS

FIG. 1 is a block diagram showing the schematic configuration of a dual-view display device according to an exemplary embodiment of the present invention.
FIG. 2A is a diagram illustrating an example of extracting first image data rows U₂ₙ₋₁ from first image data capable of implementing a first image I_{A}.
FIG. 2B is a diagram illustrating an example of extracting second image data rows D₂ₙ from second image data capable of implementing a second image I_{B}.
FIG. 2C is a diagram illustrating the configuration of image data of a third image I_{C} obtained by combining the first image data rows U₂ₙ₋₁ and the second image data rows D₂ₙ.
FIG. 3 is a perspective view schematically showing the configuration of a display unit according to an exemplary embodiment of the present invention.
FIG. 4 is a diagram illustrating a change of an image observed according to a sight line of a user.
FIG. 5 is a perspective view schematically showing the configuration of a display unit according to another exemplary embodiment of the present invention.
FIG. 6 is a schematic diagram illustrating an image data combining process executed by a processor.
FIG. 7 is a photo showing the configuration of a video phone having a display device according to an exemplary embodiment of the present invention.

### DETAILED DESCRIPTION OF EXEMPLARY EMBODIMENTS

Exemplary embodiments of the present invention will now be described in detail with reference to the annexed drawings. In the following description, a detailed description of known functions and configurations incorporated herein has been omitted for clarity and conciseness.

The present invention may provide a dual-view display device. The display device may be capable of being mounted on a video phone for telecommunication, conference, or the like.

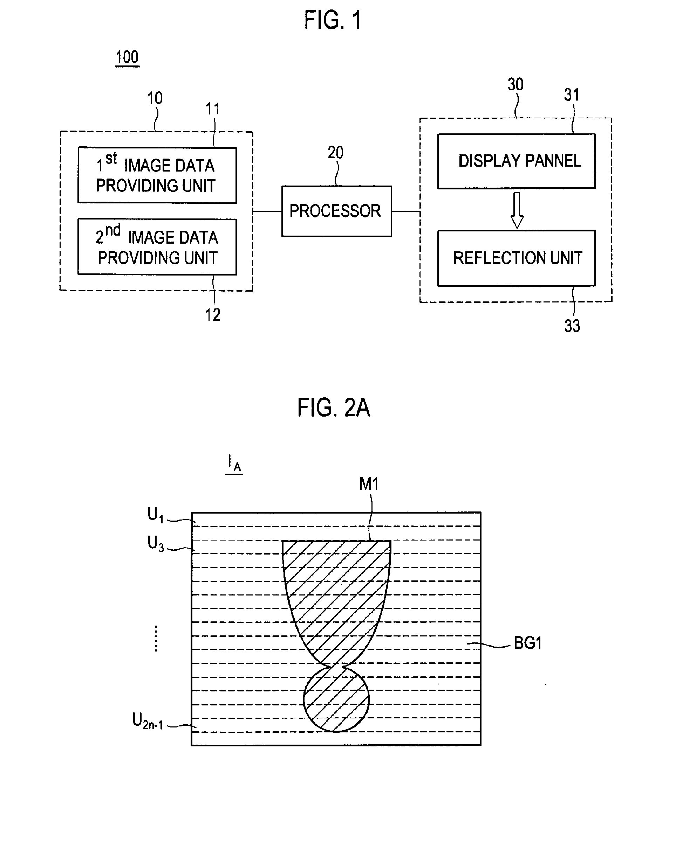

Referring to FIG. 1, an image data providing unit 10 of a dual-view display device 100 according to an exemplary embodiment of the present invention may provide two image data different from each other. According to the exemplary embodiment of the present invention, the image data providing unit 10 may include a first image data providing unit 11 and a second image data providing unit 12. First and second image data may be pixel data represented by a row and a column. The first image data providing unit 11 may provide the first image data indicating at least one of a photo, a caller's number, and an avatar of a communication or conference partner(s). When the display device 100 according to the exemplary embodiment of the present invention is provided on a video phone, the first image data providing unit 11 may provide image data transmitted from a communication partner through a data communication line during communication or provide a communication partner-related image (for example, a communication partner photo, a caller's number, or an avatar) pre-stored in the video phone. The second image data providing unit 12 may provide second image data indicating at least one of user input information (a photo, a name card, an address, an avatar, or a user's memo) and life information such as a user photo, a calendar, and a time. The second image data providing unit 12 of the display device 100 provided on the video phone may include a camera which captures an image of a user and an image around the user in real time. In this case, the second image data providing unit 12 may provide image data to the communication partner through the data communication line. The second image data providing unit 12 may provide image data pre-stored in the video phone. The first and second image data may include three-dimensional image data having depth as well as two-dimensional image data. A three-dimensional image may be represented by geometric information (x, y, z), light source information (regarding a position, type and intensity of a light source), attribute information (regarding a color, a reflection coefficient of a surface, a transparency level, and a gloss level), and the like.

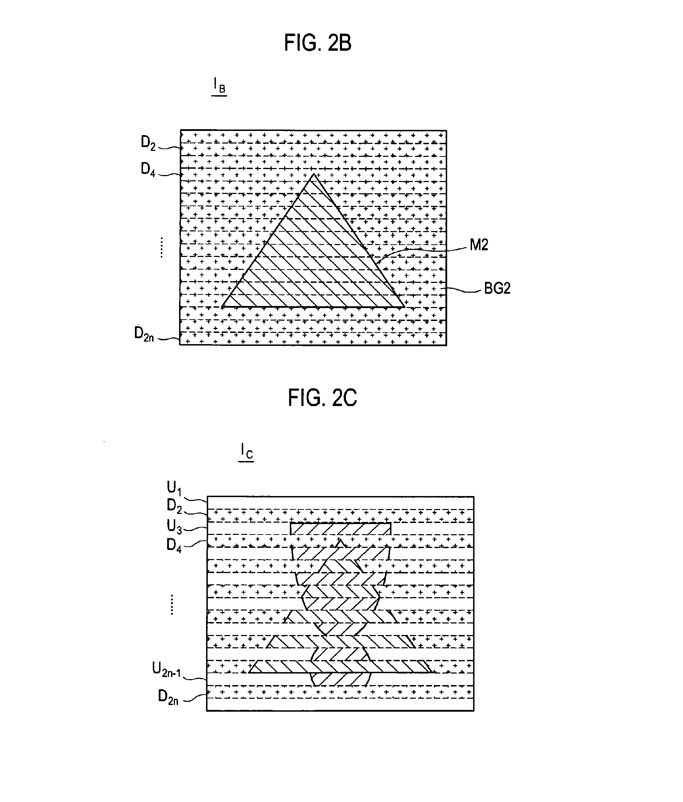

A processor 20 may form third image data on the basis of the first and second image data input from the image data providing unit 10. The processor 20 may extract a plurality of first image data rows and a plurality of second image data rows from first image data (or first image data phase-inverted (vertically inverted)) and second image data, respectively, which are neighboring at a uniform interval, and may arrange the first image data rows and the second image data rows alternately to form third image data (combined data). For example, first image data rows U₁, U₃ ... U₂ₙ₋₁ may be obtained by selecting odd rows from the first image data capable of implementing a first image I_{A} of FIG. 2A. Also, second image data rows D₂, D₄ ... D₂ₙ may be obtained by selecting even rows from the second image data capable of implementing a second image I_{B} of FIG. 2B. Of course, the third image data may be formed by combining even-row data selected from the first image data with odd-row data selected from the second image data. Data rows may be obtained by selecting data of two continuous rows from the image data. For example, the first image data rows U₁, U₂, U₅, U₆ ... may be obtained by selecting data of rows 1, 2, 5, 6 ... from the first image data, and the second image data rows D₃, D₄, D₇, D₈ ... may be obtained by selecting data of rows 3, 4, 7, 8 ... from the second image data. Hereinafter, for concise description, it is assumed that the first image data rows are U₂ₙ₋₁ obtained by selecting odd-row data from the first image data, and the second image data rows are D₂ₙ obtained by selecting even-row data from the second image data.

The processor 20 may form the third image data capable of implementing a combined image as shown in FIG. 2C, that is, a third image I_{C}, by alternately arranging the first image data rows U₁, U₃ ... U₂ₙ₋₁ and the second image data rows D₂, D₄ ... D₂ₙ.

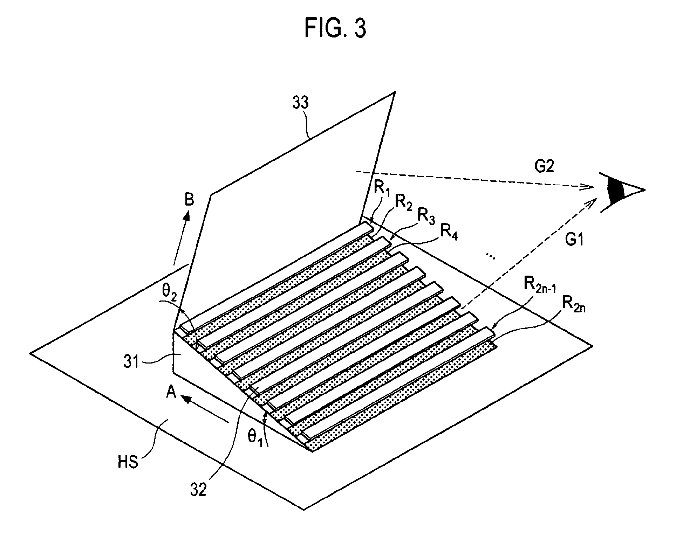

Referring to FIG. 3, a dual-view display unit 30 may include a display panel 31, an image direction control unit 32, and a reflection unit 33. The display panel 31 including a plurality of pixels may display the third image I_{C} by sequentially and alternately arranging the first image data rows U₂ₙ₋₁ and the second image data rows D₂ₙ. The display panel 31 may be implemented by a liquid crystal display (LCD). The plurality of pixels may be divided into a first-row (R₂ₙ₋₁) pixel group corresponding to the first image data rows U₂ₙ₋₁ and a second-row (R₂ₙ) pixel group corresponding to the second image data rows D₂ₙ.

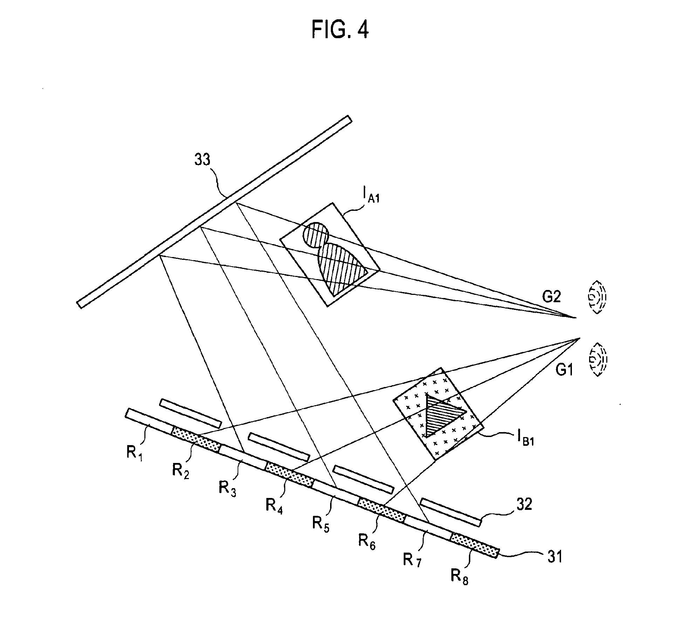

Referring to FIGS. 3 and 4, the image direction control unit 32 may cause one image selected between an image represented by the first-row (R₂ₙ₋₁) pixel group and the other image represented by the second-row (R₂ₙ) pixel group, combined in the third image I_{C}, to be displayed through the reflection unit 33, and may cause the other image to be displayed on the display panel 31. According to a parallax barrier system, the image direction control unit 32 may be arranged in parallel with the display panel 31 at a preset height from the display panel 31 as shown in FIG. 3, and may be implemented by a plurality of barriers superimposed on a part or total of the first-row (R₂ₙ₋₁) pixel group (or the second-row (R₂ₙ) pixel group). The image direction control unit 32 implemented by the barriers may be located above the display panel 31 in various forms. For example, two ends of the barrier may be connected to a coupling unit (not shown) extending from two sides of the display panel 31. Alternatively, a barrier support (not shown) connected to the two ends of each barrier may be located inside or outside the two ends of the display panel 31. When the parallax barrier system is adopted, the display panel 31 may have a first inclination angle θ₁ with a preset magnitude with respect to a horizontal surface HS, and the reflection unit 33 may have a second inclination angle θ₂ with a preset magnitude with respect to the display panel 31. In an embodiment of the present invention, the first inclination angle θ₁ may be 45 degrees and the second inclination angle θ₂ may be 45 degrees to 90 degrees.

Referring to FIGS. 3 and 4, a user may recognize only an image (for example, an image I_{A1} resulting from the first image I_{A}) represented by one group of the first-row (R₂ₙ₋₁) pixel group and the second-row (R₂ₙ) pixel group, in a state in which the first-row (R₂ₙ₋₁) pixel group (or the second-row (R₂ₙ) pixel group) is covered with the image direction control unit 32. Only the other image (for example, an image I_{B1} resulting from the second image I_{B}) represented by the other pixel group of the first-row (R₂ₙ₋₁) pixel group and the second-row (R₂ₙ) pixel group may be displayed on the reflection unit 33 directed to the display panel.

The reflection unit 33 may be located to be directed to the display panel, and may reflect the image (for example, the image I_{B1} resulting from the second image) represented by a row pixel group displayed on the reflection unit 33 between the first-row (R₂ₙ₋₁) pixel group and the second-row (R₂ₙ) pixel group of the display panel 31 which displays the third image I_{C}. The reflection unit 33 may be implemented by a half-mirror. When the image I_{A1} reflected by the reflection unit 33 is an image of a person as a communication partner, it is possible to view the communication partner's image with a sense of reality as if the person's image floats up in the air. The locations of the images I_{A1} and I_{B1} shown in FIG. 4 are only illustrative, and are not limited to the physical image locations as shown in FIG. 4.

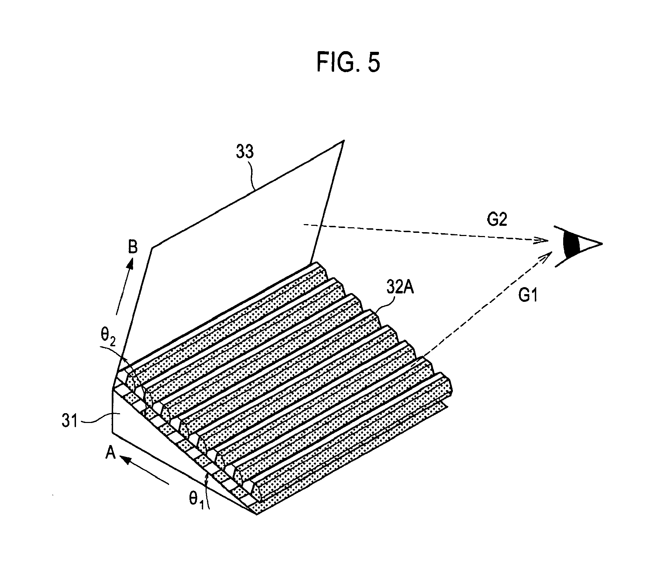

On the other hand, the image direction control unit 32 may be implemented by the parallax barrier system as shown in FIG. 3, and may also be implemented by a lenticular lens or a prism mask. For example, referring to FIG. 5, the image direction control unit 32 according to another embodiment of the present invention is arranged in parallel with the display panel 31 at a preset height from the display panel 31. The image direction control unit 32 may be implemented by a plurality of lenticular lenses 32A each having a focus surface arranged between a first-row (R₂ₙ₋₁) pixel and a second-row (R₂ₙ) pixel. Each lenticular lens 32A may have a half-cylinder shape. According to the directivity of the lens 32A, the user may recognize one image as a real image since only one of the first-row (R₂ₙ₋₁) pixel group and the second-row (R₂ₙ) pixel group is continuously displayed through the lens 32A when a sight line G1 of the user is directed to the display panel 31. The user may recognize the other image as a virtual image since the other image of the first-row (R₂ₙ₋₁) pixel group and the second-row (R₂ₙ) pixel group is continuously displayed when a sight line G2 of the user is directed to the surface of the reflection unit 33. In this embodiment, the display panel 31 may be parallel to a horizontal surface without an inclination angle according to a refractive index of the lenticular lens.

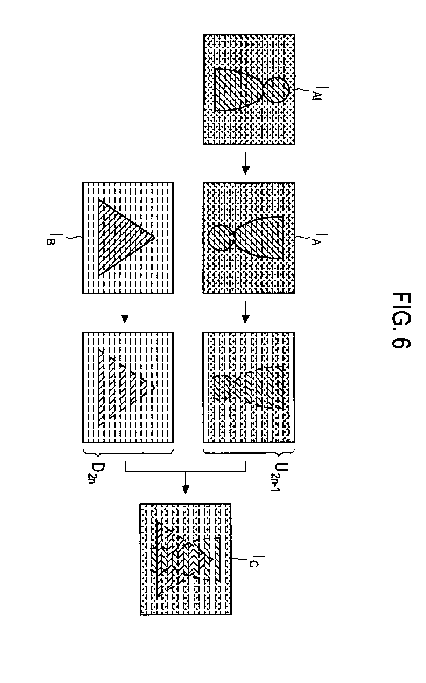

On the other hand, in consideration of a positional relationship between the display panel 31 and the reflection unit 33, it is desirable that the upper side of an image (for example, the head of a face image of a person) displayed on the display panel 31 shown in FIGS. 3 and 5 should be in a direction "A", and the upper side of an image as a virtual image to be recognized should be in a direction "B" by the image direction control unit 32. Accordingly, the image to be recognized by the user on the display panel 31 should be displayed in a direction opposite that of the image to be recognized by the user using the reflection unit 33. The processor 20 may obtain image data rows from phase-inverted image data after phase-inverting image data provided to the first image data providing unit 11 (or the second image providing unit 12). For example, referring to FIG. 6, the processor 20 may form phase-inverted image data capable of implementing the first image I_{A} as shown in FIG. 2A by phase-inverting (vertically inverting) an initial image I_{A1} capable of being initially obtained from the first image data input from the first image data providing unit 11. Subsequently, the processor 20 may obtain first image data rows U₂ₙ₋₁ from the first image I_{A} implemented by the phase-inverted image data and obtain second image data rows D₂ₙ from the second image I_{B} implemented by second image data whose phase is not inverted.

Each of the first image I_{A} and the second image I_{B} shown in FIGS. 2A and 2B may include center information M1 or M2 and background information BG1 or BG2. The center information M1 and M2 may be information representing a person's image, a caller's phone number information, life information, or the like excluding the background information BG1 and BG2 from image data. When image data input from at least one of the first image data providing unit 11 and the second image data providing unit 12 is image data of a person, the processor 20 may additionally perform a function of deleting the background around the person's image. For example, only the center information M1 representing the person's image may be displayed by extracting and deleting the background information BG1 from the first image I_{A} as shown in FIG. 2A.

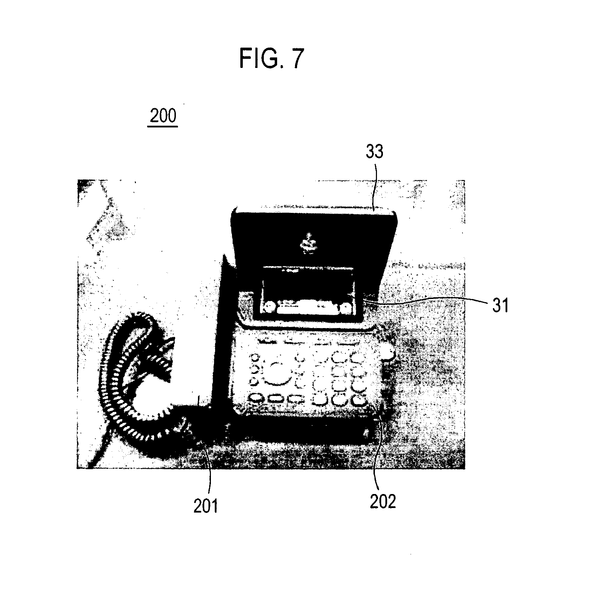

FIG. 7 shows an implementation example of a video phone 200 having a dual-view display device according to an exemplary embodiment of the present invention. The video phone 200 may have the dual-view display device along with basic elements necessary for a telephone call. The display panel 31, the reflection unit 33, a receiver 201, and a user input unit 202 are shown in FIG. 7. A processor of the display device and a communication module may be mounted inside the video phone 200.

An exemplary embodiment of the present invention as described above includes an image direction control unit arranged above a display panel and a reflection unit directed to the display panel. The user may recognize one image of the two images (real images) displayed on the display panel and may also recognize the other image reflected by a half-mirror. Accordingly, two different images capable of being observed by the user can improve a sense of reality. The present invention is easily applicable to a small-sized video system such as a video phone.

While the present invention has been described with reference to specific embodiments in this specification, it will be understood by those skilled in the art that various modifications and changes may be made without departing from the scope of the invention as defined by the appended claims.

## Claims

1. A dual-view display device comprising:
a display panel configured to receive combined data of first and second images different from each other and to display a combined image of the first and second images, wherein the first image is formed by a first pixel group and the second image is formed by a second pixel group;
a reflection unit configured to reflect one of the first and second images; and
an image direction control unit configured to enable a user to view one of the first and second images from a first position on the display panel and to view the other of the first and second images from a second position of the reflection unit.

2. The dual-view display device according to claim 1, further comprising:
an image data providing unit configured to provide first image data of the first image and second image data of the second image, wherein the first and second image data of the first and second image are represented by pixel data; and
a processor configured to extract one or more first pixel data rows from the first image data, to extract one or more second pixel data rows from the second image data, and to form combined data of the first and second images by alternately arranging the first and second pixel data rows extracted by the processor.

3. The dual-view display device according to claim 1 or 2, wherein the reflection unit comprises a half-mirror.

4. The dual-view display device according to any one of claims 1 to 3, wherein the image direction control unit comprises a plurality of barriers arranged to be longitudinally extended and separated from each other.

5. The dual-view display device according to any one of claims 1 to 3, wherein the image direction control unit comprises a plurality of lenticular lenses.

6. The dual-view display device according to any one of claims 1 to 5, wherein the display panel has a first inclination angle with respect to a horizontal surface.

7. The dual-view display device according to claim 6, wherein the reflection unit has a second inclination angle with respect to the display panel.

8. The dual-view display device according to any one of claims 2 to 7, wherein the processor is further configured to perform a phase-inversion of at least one of the first and second image data to create phase-inverted data and to extract first or second pixel data rows from the phase-inverted data.

9. The dual-view display device according to any one of claims 2 to 8, wherein the image data providing unit comprises:
a first image data providing unit configured to provide the first image data; and
a second image data providing unit configured to provide the second image data.

10. The dual-view display device according to claim 9, wherein the first or second image data providing unit comprises a camera.

11. The dual-view display device according to any one of claims 1 to 10, wherein the display panel comprises an LCD.

12. The dual-view display device according to any one of claims 2 to 11, wherein the first and second image data comprises two- or three-dimensional image data.

13. A video phone comprising:
the dual-view display device according to any one of claims 1 to 12.

14. The video phone according to claim 13, wherein the image data providing unit comprises:
a first image data providing unit configured to provide the first image data; and
a second image data providing unit configured to provide the second image data, and wherein one of the first and second image data providing units provides image data transmitted from a communication partner through a communication line.
